# EUROPÄISCHE PATENTSCHRIFT

(11) **EP 2 990 311 B1**
(45) Veröffentlichungstag und Bekanntmachung des Hinweises auf die Patenterteilung: **20.06.2018**
(21) Anmeldenummer: 15169691.1
(22) Anmeldetag: 28.05.2015
(51) Int. Cl.: G05D 1/00, H04W 4/00, B62D 59/04

(54) **KIT FÜR DIE KABELLOSE STEUERUNG EINES RANGIERANTRIEBSSYSTEMS FÜR EIN FAHRZEUG, RANGIERANTRIEBSSYSTEM SOWIE FAHRZEUG**
KIT FOR THE WIRELESS CONTROL OF A SHUNT DRIVE SYSTEM FOR A VEHICLE, SHUNT DRIVE SYSTEM AND VEHICLE
KIT POUR LA COMMANDE SANS FIL D'UN SYSTÈME D'ENTRAÎNEMENT DE MAN UVRE POUR UN VÉHICULE, SYSTÈME D'ENTRAÎNEMENT DE MAN UVRE ET VÉHICULE

(30) Priorität: 26.08.2014 DE 202014103988 U
(43) Veröffentlichungstag der Anmeldung: 02.03.2016
(73) Patentinhaber: Carman Enterprise Co., Ltd., Yuhang District Hangzhou Zhejiang 311121 (CN)
(72) Erfinder: Xianwei, Li, Hangzhou (CN)
(74) Vertreter: Albrecht, Ralf

(56) Entgegenhaltungen:
- EP-A1- 2 669 124
- EP-A2- 1 679 251
- DE-A1-102012 007 986
- DE-U1-202009 005 185
- DE-U1-202010 000 176

## Beschreibung

Die Erfindung betrifft ein Kit für die kabellose Steuerung eines Rangierantriebssystem für ein Fahrzeug, insbesondere ein Fahrzeug ohne eigenen Antrieb, wobei das Rangierantriebssystem wenigstens zwei Antriebseinheiten und eine mit den Antriebseinheiten verbundene Steuereinrichtung aufweist. Darüber hinaus betrifft die Erfindung ein Fahrzeug, insbesondere ein Fahrzeug ohne eigenen Antrieb, sowie ein Rangierantriebssystem für ein solches.

Bei Fahrzeugen ohne eigenen Antrieb kann es sich beispielsweise um Anhänger wie etwa Wohnwagen, Boots-, Pferdeanhänger oder dergleichen handeln. Bei derartigen Fahrzeugen wird als problematisch erachtet, dass diese, sofern sie nicht mit dem Zugfahrzeug, z.B. einem PKW, verbunden sind, von Hand nur mühsam fortbewegt werden können. Bei einem Wohnwagenanhänger beispielsweise, der an geeigneter Stelle auf einem Campingplatz von dem PKW, mit welchem er transportiert wurde, abgekuppelt worden ist, ist das Rangieren von Hand in die endgültige Parkposition mit großer Anstrengung für den Fahrer verbunden.

Um einen Rangiervorgang im abgekoppelten Zustand zu erleichtern, wurden Rangierantriebssysteme entwickelt, welche an einem Fahrzeug ohne Eigenantrieb montiert werden können. Ein solches Rangierantriebssystem umfasst in der Regel wenigstens zwei Antriebseinheiten, über welche die Räder des zu rangierenden Fahrzeuges in Rotation versetzt werden können. Die Antriebseinheiten werden an dem Fahrzeug außenseitig, in der Regel in einem Bereich unmittelbar vor oder hinter den Rädern, welche die Antriebseinheiten antreiben sollen, montiert. Die Antriebseinheiten umfassen jeweils ein rotierbares Antriebselement, welches in reibschlüssigen Kontakt mit einem Rad des Fahrzeuges gebracht wird, so dass eine Rotation des Antriebselementes eine Rotation des Rades des Fahrzeuges bewirkt. Jedem Antriebselement ist ein Motor zugeordnet, über welchen eine Rotation im Uhrzeiger- oder im Gegenuhrzeigersinn verursacht wird. Wird bei einem einachsigen Fahrzeug im Bereich jedes der beiden Räder, bzw. bei einem zwei- oder mehrachsigen Fahrzeug im Bereich jedes Rades zumindest einer der Achsen eine solche Antriebseinheit montiert, kann das Fahrzeug mittels der Antriebseinheiten von einem Benutzer komfortabel rangiert werden.

Für die Steuerung der Motoren der Antriebseinheiten umfassen die bekannten Rangierantriebssysteme in der Regel eine Steuereinrichtung mit einer geeigneten Elektronik. Die Steuereinrichtung wird im Gegensatz zu den Antriebseinheiten, die im Bereich der Räder außen an dem Fahrzeug montiert sind, im trockenen Innenraum des Fahrzeuges vorgesehen. Kommt ein Rangierantriebssystem an einem Wohnwagenanhänger zum Einsatz, wird die Steuereinrichtung insbesondere unter einer Bank oder auf einer Bettablage im Innenraum des Wohnwagens montiert.

Die Steuereinrichtung ist über geeignete Kabel einerseits mit jeder der beiden Antriebseinheiten und andererseits mit einer Spannungsquelle verbunden. Als solche kann beispielsweise eine in dem Fahrzeug vorgesehene Batterie zum Einsatz kommen. Die Steuereinrichtung ist zweckmäßiger Weise nahe der Batterie positioniert. Über die mit der Batterie verbundene Steuereinrichtung werden die Motoren der Antriebseinheiten mit elektrischer Energie versorgt.

Ein Benutzer kann die Antriebseinheiten über eine Bedieneinrichtung insbesondere kabellos steuern. Die Bedieneinrichtung umfasst dazu ein Bedienfeld, welches zweckmäßiger Weise per Fingerdruck aktivierbare Tasten oder Felder aufweist, über welche der Bediener die Antriebseinheiten und damit das Fahrzeug gezielt in Bewegung versetzen kann. Insbesondere sind Tasten oder Felder vorgesehen, über welche eine Vorwärts- und Rückwärtsbewegung des Fahrzeuges verursacht werden kann, sowie eine links- bzw. rechtsgerichtete Kurvenfahrt in Vorwärts- oder Rückwärtsrichtung.
Bekannte Bedieneinrichtungen sind in der Regel als Fernbedienungen ausgestaltet, die der Benutzer in der Hand halten und das Fahrzeug so komfortabel von einer Position in der Nähe des Fahrzeugs steuern kann. Die Fernbedienungen sind ausgestaltet, um von dem Benutzer eingegebene Rangierbefehle kabellos an die Steuereinrichtung zu übergeben. Als nächst-kommender Stand der Technik wird das Dokument D5 DE202010000176U1 erachtet. An den bekannten Rangierantriebssystemen, welche mittels Bedieneinrichtungen in Form von Fernbedienungen kabellos bedient werden können, wird teilweise als nachteilig erachtet, dass die kabellose Übertragung von den Rangierbefehlen an die Steuereinrichtung nicht immer zuverlässig erfolgt.

Ausgehend von diesem Stand der Technik ist es eine Aufgabe der vorliegenden Erfindung, ein Rangierantriebssystem der bekannten Art derart weiterzuentwickeln, dass eine zuverlässige kabellose Kommunikation zwischen der Bedieneinrichtung und der Steuereinrichtung zu allen Zeiten gewährleistet ist.

Diese Aufgabe wird gelöst durch die Merkmale von Anspruch 1. Ein Kit für die kabellose Steuerung eines Rangierantriebssystem für ein Fahrzeug, insbesondere ein Fahrzeug ohne eigenen Antrieb, wobei das Rangierantriebssystem wenigstens zwei Antriebseinheiten und eine mit den Antriebseinheiten verbundenen Steuereinrichtung aufweist, umfasst:
- ein Kommunikationsmodul, welches ausgebildet ist, um kabellos Befehle für die Steuerung der Antriebseinheiten zu empfangen,
- Befestigungsmittel, um das Kommunikationsmodul an dem Fahrzeug, insbesondere außenseitig an dem Fahrzeug und bevorzugt am Boden des Fahrzeuges, zu befestigen, und
- Verbindungsmittel, um das Kommunikationsmodul mit der Steuereinrichtung zu verbinden, so dass die für die Steuerung der Antriebseinheiten kabellos empfangenen Befehle von dem Kommunikationsmodul an die Steuereinrichtung übergeben werden können.

Der Kerngedanke der vorliegenden Erfindung besteht mit anderen Worten darin, ein Kit für die kabellose Steuerung eines Rangierantriebssystem zur Verfügung zu stellen, welches ein separates Kommunikationsmodul umfasst.
Das Kit umfasst ferner Befestigungsmittel, um das Kommunikationsmodul an dem Fahrzeug, insbesondere von außen, z.B. am Boden des Fahrzeuges, zu befestigen. Als Befestigungsmittel können alle bekannten Mittel zum Einsatz kommen, die geeignet sind, das Kommunikationsmodul lösbar oder auch dauerhaft an dem Fahrzeug zu fixieren. Die Befestigungsmittel können beispielsweise Schrauben umfassen, welche durch Öffnungen, die in einem Gehäuse des Kommunikationsmoduls vorgesehen sind, in eine Wandung des Fahrzeuges geschraubt werden. Alternativ kann das Kommunikationsmodul über geeignete Klebemittel an dem Fahrzeug vorgesehen werden. Wird das Kommunikationsmodul außen an dem Fahrzeug befestigt, kommen zweckmäßigerweise witterungsbeständige Befestigungsmittel zum Einsatz.

Das Kommunikationsmodul umfasst in an sich bekannter Weise insbesondere einen Empfänger für einen kabellosen Datenempfang. Für die kabellose Übertragung der Rangierbefehle von der Bedieneinrichtung zu dem Kommunikationsmodul kann jeder bekannte Standard für den kabellosen Datenaustausch Verwendung finden.

Das erfindungsgemäße Kit umfasst neben dem Kommunikationsmodul und den Befestigungsmitteln weiterhin Verbindungsmittel, über welche das insbesondere außenseitig an dem Fahrzeug vorgesehene Kommunikationsmodul mit der Steuereinrichtung des Rangierantriebssystems im Fahrzeuginnenraum verbunden werden kann. Die Verbindungsmittel sind derart ausgebildet, dass Rangierbefehle, welche kabellos von der Bedieneinrichtung abgesendet und von dem Kommunikationsmodul empfangen wurden, an die Steuereinrichtung übergeben werden können. Die Verbindungsmittel sind zweckmäßiger Weise ferner derart ausgestaltet, dass sie eine Spannungsversorgung des Kommunikationsmoduls über die Steuereinrichtung, die in der Regel mit einer Spannungsquelle verbunden ist, ermöglichen. Alternativ oder zusätzlich kann das Kommunikationsmodul eine eigene Spannungsquelle in Form einer Batterie aufweisen.

Die Verbindungsmittel umfassen insbesondere wenigstens ein geeignetes Kabel, über welches eine kommunikative Verbindung zwischen dem Kommunikationsmodul und der Steuereinrichtung hergestellt sowie eine Spannungsversorgung des Kommunikationsmoduls gewährleistet werden kann.

Ein erfindungsgemäß von der Steuereinrichtung physisch getrenntes Kommunikationsmodul kann eine kabellose Kommunikation zwischen der Steuereinrichtung und der Bedieneinrichtung konstruktiv ermöglichen. Das erfindungsgemäße Kit kann insbesondere auf sehr komfortable Weise an Fahrzeugen, die bereits mit einem Rangierantriebssystem ausgerüstet sind, nachgerüstet werden. Hierfür wird das Kommunikationsmodul einfach an dem Fahrzeug, insbesondere außenseitig, vorgesehen und über die Verbindungsmittel mit der bereits vorhandenen Steuereinrichtung im Fahrzeuginnenraum verbunden. Dabei kann auf beliebige drahtlose Kommunikationsstandards nachgerüstet werden, wofür dann einfach ein entsprechend ausgestaltetes Kommunikationsmodul zum Einsatz kommt.
Wird das Kommunikationsmodul an der Fahrzeugaußenseite befestigt und über die Verbindungsmittel mit der im Innenraum des Fahrzeuges vorgesehenen Steuereinrichtung verbunden, ist ferner gewährleistet, dass Abschirmungen, die durch das Gehäuse des Fahrzeuges, welches in der Regel in erheblichem Maße metallische Teile umfasst, bzw. vollständig aus Metall besteht, gänzlich vermieden werden. Im Ergebnis kann die kabellose Datenübertragung zwischen der Bedieneinrichtung und der Steuereinrichtung des Rangierantriebssystems besonders zuverlässig erfolgen, und ein Benutzer kann das Fahrzeug zu allen Zeiten kabellos steuern, ohne dass Unterbrechungen bei dem Befehlstransfer zwischen der Bedieneinrichtung und der Steuereinrichtung auftreten. Es ist vorgesehen, dass das Kommunikationsmodul ausgebildet ist, um die Befehle für die Steuerung der Antriebseinheiten kabellos via Bluetooth zu empfangen. Der Bluetooth-Standard hat sich als besonders geeignet erwiesen, um die kabellose Übertragung von Rangierbefehlen von der Bedieneinrichtung zu dem Kommunikationsmodul zu ermöglichen. Bluetooth ist ein bekanntes Kommunikationsprotokoll, welches die kabellose Datenübertragung zwischen Geräten über vergleichsweise kurze Distanzen zuverlässig gewährleistet. Darüber hinaus existiert eine Vielzahl von Geräten, die in der Lage sind, einen Datentransfer via Bluetooth zu ermöglichen.

Eine weitere Ausführungsform des erfindungsgemäßen Kits zeichnet sich dadurch aus, dass dem Kommunikationsmodul ein temperatur- und/oder witterungsbeständiges Gehäuse zugeordnet ist. Dies ist zweckmäßig, wenn das Kommunikationsmodul außen an dem Fahrzeug befestigt wird. Das Kommunikationsmodul wird gemäß dieser Ausführungsform von einem Gehäuse umgeben, welches es vor den Witterungsbedingungen sowie vor vergleichsweise hohen bzw. vergleichsweise niedrigen Temperaturen schützt. Dabei kann vorgesehen sein, dass das Kommunikationsmodul selbst ein temperatur- und/oder witterungsbeständiges Gehäuse aufweist. Alternativ kann ein temperatur- und/oder witterungsbeständiges Gehäuse von außen an dem Fahrzeug vorgesehen sein, in welches das Kommunikationsmodul bei Bedarf eingeschoben bzw. eingesteckt wird. Die Befestigungsmittel des erfindungsgemäßen Kits dienen in diesem Falle insbesondere der Fixierung des temperatur- und/oder witterungsbeständigen Gehäuses an dem Fahrzeug. Das Kommunikationsmodul kann in diesem Fall beispielsweise nur für die Dauer eines Rangiermanövers in das Gehäuse eingesetzt und mit der Steuereinrichtung verbunden werden. Ist das Rangiermanöver beendet, kann das Kommunikationsmodul aus dem Gehäuse herausgenommen werden, um vor Diebstahl und Zerstörungen geschützt zu sein.

In Weiterbildung der Erfindung ist vorgesehen, dass das Kit ferner eine Bedieneinrichtung umfasst, welche derart ausgebildet ist, dass ein Benutzer Befehle für die Steuerung der Antriebseinheiten in die Bedieneinrichtung eingeben kann und dass die eingegebenen Befehle kabellos an das Kommunikationsmodul übertragen werden. Eine derartige Bedieneinrichtung ermöglicht es einem Benutzer, die Antriebseinheiten des Rangierantriebssystems auf komfortable Weise kabellos zu bedienen.

Dabei kann die Bedieneinrichtung ausgebildet sein, um die eingegebenen Befehle via Bluetooth an das Kommunikationsmodul zu übertragen. Diese Ausgestaltung ist zweckmäßig, wenn auch das Kommunikationsmodul ausgestaltet ist, um eine Kommunikation via Bluetooth zu ermöglichen. Zwischen der Bedieneinrichtung und dem Kommunikationsmodul können dann via Bluetooth die Rangierbefehle für die Antriebseinheiten übertragen werden.

Gemäß einer besonders bevorzugten Ausführungsform umfasst das erfindungsgemäße Kit weiterhin eine App für ein Smartphone oder einen Tablet-PC, welche ausgebildet ist, um einem Benutzer die kabellose Steuerung der Antriebseinheiten über ein Smartphone oder einen Tablet-PC zu ermöglichen. Bei der App handelt es sich um eine Anwendungssoftware, die die Steuerung der Antriebseinheiten ermöglicht.

Dabei kann in vorteilhafter Ausgestaltung die Bedieneinrichtung ein Smartphone oder einen Tablet-PC sein, auf welchem die App installiert ist.

Diese Ausgestaltung hat sich als besonders vorteilhaft erwiesen, da einem Benutzer ermöglicht wird, die Antriebseinheiten des Rangierantriebssystems mittels seines Smartphones bzw. Tablet-PCs zu steuern. Hierfür wird eine spezielle App zur Verfügung gestellt, welche so ausgestaltet ist, dass eine Steuerung der Antriebseinheiten über das Smartphone bzw. den Tablet-PC, insbesondere über den Touchscreen oder auch über eine Sprachsteuerung, erfolgen kann. Kommt ein Touchscreen zum Einsatz, wird insbesondere im Rahmen der App ein geeignetes Bedienfeld auf diesem dargestellt. Das dargestellte Bedienfeld simuliert zweckmäßiger Weise die aus dem Stand der Technik bekannten, als Fernbedienung ausgebildeten Bedieneinrichtungen für Rangierantriebssysteme. Konkret werden beispielsweise, wenn die App aufgerufen ist, auf dem Touchscreen des Smartphones bzw. Tablet-PCs Tasten dargestellt, über welche die Steuerung eines Fahrzeuges, welches mit einem erfindungsgemäßen Rangierantriebssystem ausgestattet ist, auf komfortable Weise durchgeführt werden kann. Durch drücken einer der Tasten wird beispielsweise eine gradlinige Vor- oder Rückwärtsbewegung oder eine links- oder rechtsgerichtete Kurvenfahrten in vor- bzw. rückwärtige Richtung verursacht. Zur Orientierung kann neben den Tasten vorgenannter Art auf dem Bedienfeld der App eine schematische Darstellung des Fahrzeugs, beispielsweise in der Aufsicht, enthalten sein.

Kommt eine App zum Einsatz, kann diese insbesondere auch anzeigen, wie gut die Signalstärke der kabellosen Verbindung zwischen dem Smartphone bzw. dem Tablet-PC und dem Kommunikationsmodul ist.

Bevorzugt wird dabei ein Smartphone oder einen Tablet-PC eingesetzt das/der Bluetooth-fähig ist. Eine Vielzahl der am Markt befindlichen Smartphones und Tablet-PCs ist bereits serienmäßig mit einem Bluetooth Sender und Empfänger ausgestattet. Kommt im Rahmen des erfindungsgemäßen Kits ein Kommunikationsmodul zum Einsatz, welches Bluetooth-fähig ist, kann der Benutzer die Antriebseinheiten mit seinem Bluetooth-fähigen Smartphone bzw. Tablet-PC unmittelbar steuern, ohne dass ein Erweiterung der Smartphone- bzw. Tablet-PC-hardware hierfür erforderlich wäre. Er lädt einfach eine entsprechende App herunter, installiert diese und kann ein Fahrzeug, welches mit einem Rangierantriebssystem sowie mit dem erfindungsgemäßen Kit ausgestattet ist, über sein Smartphone bzw. seinen Tablet-PC komfortabel rangieren.

Die Verwendung eines Smartphones bzw. eines Tablet-PCs zur Steuerung der Antriebseinheiten bietet auch den großen Vorteil, dass auf die Verwendung einer als Fernbedienung ausgestalteten Bedieneinrichtung der herkömmlichen Art vollständig verzichtet werden kann. Insbesondere kann, wenn weitere Einrichtungen an oder um das Fahrzeug vorgesehen sind, welche drahtlos, insbesondere via Bluetooth gesteuert werden können, ein einziges Smartphone bzw. ein einziger Tablet-PC mit unterschiedlichen Apps zum Einsatz kommen, welches bzw. welcher dann sämtliche Fernbedienungen ersetzt.

Erfindungsgemäß kann als Smartphone jede Art von Mobiltelefon zum Einsatz kommen, auf welchem Applikationen, also Apps installiert und ausgeführt werden können. Als Tablet-PC kann jeder komfortabel in der Hand haltbare Computer zum Einsatz kommen, auf dem Apps ausführbar sind und der eine drahtlose Kommunikationsverbindung unterstützt. Der erfindungsgemässe Kit zeichnet sich ferner dadurch aus, dass die Verbindungsmittel wenigstens ein Kabel und wenigstens einen Stecker umfassen, wobei der wenigstens eine Stecker ausgebildet ist, um in wenigstens eine an der Steuereinrichtung vorgesehene Buchse gesteckt zu werden und so das Kommunikationsmodul mit der Steuereinrichtung kommunikativ zu verbinden. Ein mit geeigneten Steckern versehenes Kabel stellt ein geeignetes Mittel dar, um das Kommunikationsmodul an der Fahrzeugaußenseite und die Steuereinrichtung im Fahrzeuginnenraum kommunikativ miteinander zu verbinden.
Ferner kann das Kommunikationsmodul derart ausgebildet sein, dass mit diesem kabellos Daten gesendet werden können. Gemäß dieser Ausgestaltung können nicht nur Rangierbefehle für die Antriebseinheiten von dem Kommunikationsmodul empfangen werden, sondern dieses ist derart ausgestaltet, dass es auch Daten senden kann. Beispielsweise können Zustandsdaten, welche in der Steuereinrichtung verfügbar sind, wie etwa der Ladezustand der Batterie, über welche die Antriebseinheiten mit elektrischer Energie versorgt werden oder andere Zustandsdaten an die Bedieneinrichtung gesendet und mittels dieser für den Benutzer visualisiert werden. Kommt ein Smartphone als Bedieneinrichtung zum Einsatz, können Zustandsdaten im Rahmen der App visualisiert werden.
Ein weiterer Gegenstand der vorliegenden Erfindung ist ein Rangierantriebssystem für ein Fahrzeug, insbesondere ein Fahrzeug ohne eigenen Antrieb, umfassend:
- wenigstens zwei Antriebseinheiten, die ausgebildet sind, um an dem Fahrzeug vorgesehen zu werden und jeweils ein Rad des Fahrzeuges anzutreiben,
- eine Steuereinrichtung, welche mit den Antriebseinheiten kommunikativ verbunden und ausgestaltet ist, um die Antriebseinheiten zu steuern,
- ein Kit gemäß der vorliegenden Erfindung, wobei das Kommunikationsmodul mit der Steuereinrichtung über die Verbindungsmittel verbunden ist, so dass die für die Steuerung der Antriebseinheiten kabellos empfangenen Befehle von dem Kommunikationsmodul an die Steuereinrichtung übergeben werden können.
Es ist vorgesehen, dass die Verbindungsmittel des Kits wenigstens ein Kabel und wenigstens einen Stecker umfassen und die Steuereinrichtung wenigstens eine Buchse aufweist, die derart ausgestaltet ist, dass der wenigstens eine Stecker in diese einsteckbar ist, um das Kommunikationsmodul mit der Steuereinrichtung des Rangierantriebssystems zu verbinden.
In Weiterbildung ist ferner vorgesehen, dass jede Antriebseinheit ein drehbar gelagertes Antriebselement umfasst, welches derart ausgebildet und angeordnet ist, dass es in Anlage an ein Rad des Fahrzeuges bringbar ist, um das Fahrzeug anzutreiben.

Schließlich ist Gegenstand der vorliegenden Erfindung ein Fahrzeug, insbesondere ein Fahrzeug ohne eigenen Antrieb, umfassend ein Rangierantriebssystem, wobei das Kommunikationsmodul über die Befestigungsmittel an dem Fahrzeug, insbesondere außenseitig an dem Fahrzeug und bevorzugt am Boden des Fahrzeuges, befestigt ist.

In Weiterbildung des erfindungsgemäßen Fahrzeuges ist vorgesehen, dass die Steuereinrichtung im Innenraum des Fahrzeugs und das Kommunikationsmodul außen an dem Fahrzeug vorgesehen ist, und die Verbindungsmittel wenigstens ein Kabel umfassen, welches sich durch eine Öffnung in einer Fahrzeugwandung, insbesondere durch eine Öffnung im Fahrzeugboden, erstreckt. Die Steuereinrichtung im Innen- und das Kommunikationsmodul im Außenraum des Fahrzeugs werden dabei durch das durch die Öffnung geführte Kabel kommunikativ verbunden.

Bei dem erfindungsgemäßen Fahrzeug kann es sich beispielsweise um einen Anhänger handeln. Das erfindungsgemäße Kit bzw. das erfindungsgemäße Rangierantriebssystem können prinzipiell an allen Fahrzeugen zum Einsatz kommen, insbesondere an allen Fahrzeugen, die keinen eigenen Antrieb aufweisen. Als Beispiele für ein Fahrzeug ohne eigenen Antrieb seien Anhänger genannt. Bei Anhängern kann es sich beispielsweise um Wohnwagen-, Boots- oder Pferdeanhänger handeln.

Weitere Merkmale und Vorteile der vorliegenden Erfindung werden anhand der nachfolgenden Beschreibung einer Ausführungsform des erfindungsgemäßen Kits unter Bezugnahme auf die beiliegende Zeichnung deutlich.

In der Zeichnung zeigt:
- Figur 1: eine schematische Darstellung eines Wohnwagenanhängers, in welchem ein erfindungsgemäßes Rangierantriebssystem montiert ist,
- Figur 2: ein erfindungsgemäßes Kommunikationsmodul in schematischer Darstellung, welches über ein Kabel mit der Steuereinrichtung des Rangierantriebssystems verbunden ist, und
- Figur 3: eine schematische Darstellung eines Smartphones mit einer App, welche einem Benutzer die kabellose Steuerung des Rangierantriebssystems ermöglicht.

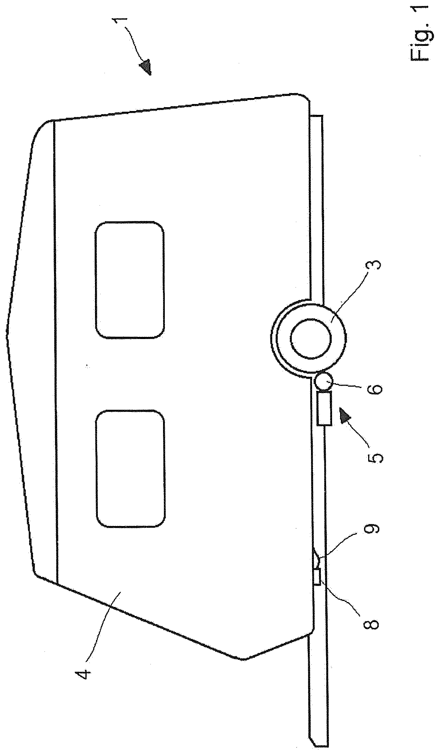

Die Figur 1 zeigt in schematischer Darstellung die Seitenansicht eines Wohnwagenanhängers 1. Der Wohnwagenanhänger 1 umfasst ein Fahrgestell 2 mit einer Achse, an welcher zwei Räder 3 vorgesehen sind. In der Seitendarstellung in Figur 1 ist nur das in Fahrtrichtung linke Rad 3 des Wohnwagenanhängers 1 zu erkennen. Auf dem Fahrgestell 2 ist eine Wohnwageneinheit 4 montiert. Im Inneren der Wohnwageneinheit 4 befinden sich diverse Einrichtungsgegenstände, u.a. ein Bett, eine Bank und ein Tisch, was in der Außendarstellung in Figur 1 nicht erkennbar ist.

Der Wohnwagenanhänger 1 kann, wenn dieser, wie in Figur 1 dargestellt, nicht mit einem als Zugfahrzeug dienenden PKW verbunden ist, von Hand nur schwerlich rangiert werden. Daher ist der Wohnwagenanhänger 1 mit einem erfindungsgemäßen Rangierantriebssystem ausgestattet. Dieses umfasst zwei Antriebseinheiten 5, von welchen in der Seitendarstellung in Figur 1 nur die an dem in Fahrtrichtung links vorgesehenen Rad 3 montierte zu erkennen ist. Über die beiden Antriebseinheiten 5 können die Räder 3 des Wohnwagenanhängers 1 in Rotation versetzt werden.

Dafür sind die Antriebseinheiten 5 außenseitig in einem in Fahrtrichtung vor den Rädern 3 befindlichen Bereich montiert. Jede der beiden Antriebseinheiten 5 umfasst jeweils ein Antriebselement 6, welches derart ausgebildet und angeordnet ist, dass es in Anlage an das entsprechende Rad 3 des Wohnwagenanhängers 1 gebracht ist, um diesen anzutreiben. Konkret ist die Antriebseinheit 5 derart an dem Wohnwagenanhänger 1 angeordnet, dass das Antriebselement 6, welches die Form einer Rolle aufweist, in reibschlüssigem Kontakt mit dem jeweiligen Rad 3 bringbar ist. Die Antriebseinheiten 5 umfassen jeweils einen in der Figur 1 nicht erkennbaren Motor, über welchen das jeweilige Antriebselement 6 in Rotation im Uhrzeiger- oder gegen den Uhrzeigersinn versetzt werden kann.

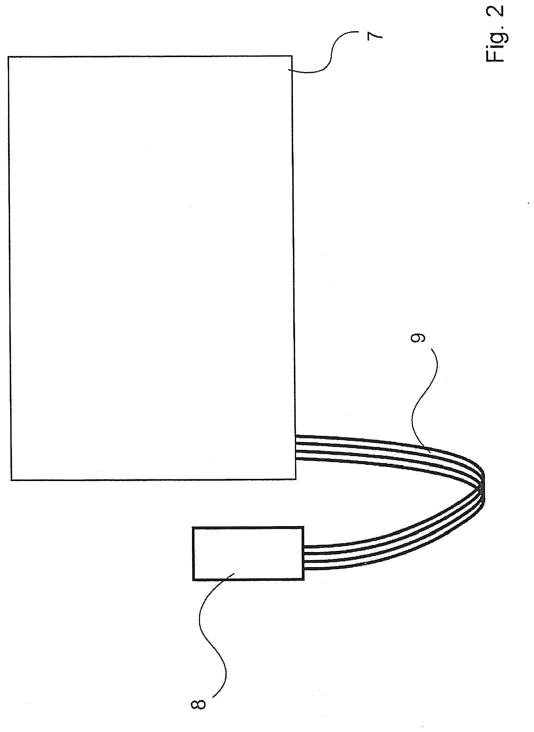

Das Rangierantriebssystem umfasst ferner eine in Figur 2 dargestellte Steuereinrichtung 7, welche mit den Antriebseinheiten 5 verbunden und ausgestaltet ist, um die Antriebseinheiten 5 zu steuern. Über die Steuereinrichtung 7 werden konkret die Motoren, welche die Antriebselemente 6 in Rotation versetzen, gesteuert. Die Steuereinrichtung 7 ist im Innenraum der Wohnwageneinheit 4, konkret in einer in dieser vorgesehenen Bank befestigt, was in der Außenansicht in Figur 1 nicht erkennbar ist. Jede der beiden Antriebseinheiten 5 ist über jeweils ein Kabel mit der Steuereinrichtung 7 verbunden. Die Steuereinrichtung ist ferner über ein weiteres Kabel mit einer in dem Wohnwagenanhänger 1 vorgesehenen Batterie verbunden um diese mit Spannung zu versorgen. Die Antriebseinheiten 5 werden ebenfalls über die Batterie gespeist.

Schließlich umfasst das Rangierantriebssystem ein erfindungsgemäßes Kit mit einem Kommunikationsmodul 8. Das Kommunikationsmodul 8 ist ausgebildet, um die Befehle für die Steuerung der Antriebseinheiten 5 kabellos via Bluetooth zu empfangen sowie Daten kabellos via Bluetooth zu senden. Hierzu umfasst das Kommunikationsmodul 8 einen Bluetooth-Sender sowie einen Bluetooth-Empfänger. Das Kommunikationsmodul 8 weist bei der dargestellten Ausführungsform ein temperatur- und witterungsbeständiges Gehäuse auf, welches mittels Schrauben von außen an dem Wohnwagenanhänger 1, konkret am Boden der Wohnwageneinheit 4 befestigt ist. Das Gehäuse schützt die Elektronik des Kommunikationsmoduls 8 vor hohen bzw. niedrigen Temperaturen sowie Feuchtigkeit.

Das erfindungsgemäße Kit weist weiterhin ein Kabel 8 auf, über welches das am Boden der Wohnwageneinheit 4 des Wohnwagenanhängers 1 befestigte Kommunikationsmodul 8 mit der im Innenraum der Wohnwageneinheit 4 vorgesehenen Steuereinrichtung 7 kommunikativ verbunden ist. Das Kabel dient neben dem Datentransfer auch der Spannungsversorgung des Kommunikationsmoduls 8 über die Batterie, welche mit der Steuereinrichtung 7 verbunden ist. Wie in der vergrößerten Darstellung in Figur 2, in welcher die mit dem Kommunikationsmodul 8 verbundene Steuereinrichtung 7 im nicht montierten Zustand dargestellt ist, erkennbar, umfasst das Kabel 9 insgesamt vier Adern. Das Kabel 9 erstreckt sich durch ein im Boden der Wohnwageneinheit 4 vorgesehenes Loch, um die Verbindung mit der im Inneren der Wohnwageneinheit 4 vorgesehen Steuereinrichtung zu gewährleisten. Die Steuereinrichtung 7 umfasst eine in Figur 2 nicht erkennbare Buchse, in welche ein an dem Kabel 9 vorgesehener Stecker einesteckt ist. Kommunikationsmodulseitig erstreckt sich das Kabel 9 unmittelbar in das Modul 8. Alternativ kann auch die Verbindung zwischen dem Kabel 9 und dem Kommunikationsmodul 8 über einen geeigneten Stecker realisiert werden.

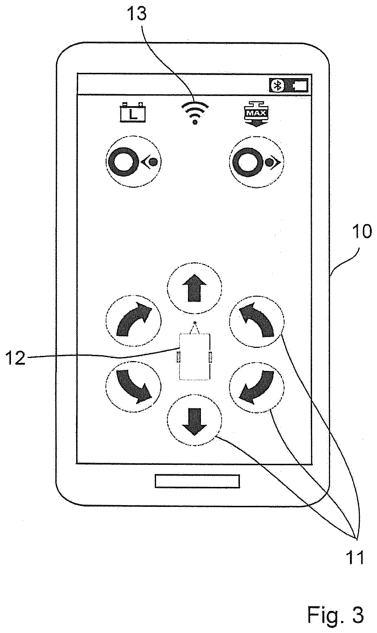

Darüber hinaus umfasst das Kit eine in der Figur 3 dargestellte Bedieneinrichtung, welche derart ausgebildet ist, dass ein Benutzer Befehle für die Steuerung der Antriebseinheiten 5 in die Bedieneinrichtung eingeben kann, und dass die eingegebenen Befehle kabellos via Bluetooth an das Kommunikationsmodul 8 übertragen werden. Bei dem dargestellten Ausführungsbeispiel ist die Bedieneinrichtung durch ein Bluetooth-fähiges Smartphone 10 gebildet.

Schließlich ist eine App, also eine Anwendungssoftware für das Smartphone Bestandteil des Kits, welche ausgebildet ist, um einem Benutzer die kabellose Steuerung der Antriebseinheiten 5 über das Smartphone zu ermöglichen. Die App ist auf dem Smartphone 10 installiert. Konkret ist die App derart gestaltet, dass diese das Bedienfeld einer herkömmlichen Fernbedienung auf dem Touchscreen des Smartphones simuliert, wenn sie aktiviert ist, wie in Figur 3 dargestellt. Dabei werden Tasten 11 dargestellt, über welche die Steuerung des Wohnwagenanhängers 1 auf komfortable Weise durchgeführt wird. Konkret sind Tasten 11 vorgesehen, welche eine gradlinige Vor- oder Rückwärtsbewegung, eine links- oder rechtsgerichtete Kurvenfahrt in vor- oder rückwärtige Richtung verursachen können. Ferner ist auf dem Bedienfeld der App zur Orientierung im Zentrum der Tasten eine schematische Darstellung 12 des Wohnwagenanhängers 1 enthalten. Darüber hinaus wird über das Bedienfeld der App, konkret über eine Signalstärkeanzeige 13, angezeigt, wie gut die Signalstärke der kabellosen Verbindung zwischen dem Smartphone 10 und dem Kommunikationsmodul 8 aktuell, also an der Position, an welcher sich der Benutzer mit dem Smartphone 10 in der Umgebung des Wohnwagenanhängers 1 aufhält, ist.

Möchte der Benutzer seinen Wohnwagenanhänger 1 rangieren, so betätigt er die bei aufgerufener App auf seinem Touchscreen dargestellten Tasten 11 entsprechend der gewünschten Bewegung, welche der Rangierantrieb für den Wohnwagenanhänger 1 verursachen soll. Von dem Bluetooth-fähigen Smartphone 10 werden die zu den jeweiligen Tastenbefehlen korrespondierenden Rangierbefehle kabellos via Bluetooth an das an der Außenseite des Wohnwagenanhängers 1 vorgesehene Kommunikationsmodul 8 übermittelt. Das Kommunikationsmodul 8 überträgt die Befehle kabelgebunden über das Kabel 9, mit welchen es mit der im Innenraum des Wohnwagenanhängers 1 vorgesehenen Steuereinrichtung 7 verbunden ist, an die Steuereinrichtung 7. Diese gibt die Befehle wiederum über die entsprechenden Kabel an die Antriebseinheiten 5 weiter. Die Motoren der Antriebseinheiten 5 werden entsprechend der empfangenen Befehle so angesteuert, dass die Antriebselemente 6, welche in reibschlüssiger Verbindung mit den Rädern 3 des Wohnwagenanhängers 1 stehen, entsprechend dem Befehl des Benutzers in vor- bzw. rückwärtsgerichtete Rotation versetzt werden.

Im Ergebnis wird der Wohnwagenanhänger 1 über die in das Smartphone 10 eingegebenen Rangierbefehle gesteuert.

Unter Verwendung des erfindungsgemäßen Kits, welches ein außenseitig an dem Wohnwagenanhänger 1 befestigtes Kommunikationsmodul 8 umfasst, wird dabei zu allen Zeiten gewährleistet, dass die vom Smartphone 10 aus gesandten kabellosen Rangierbefehle das Kommunikationsmodul 8 erreichen. Eine Abschirmung durch das Gehäuse der Wohnwageneinheit 4 wird erfindungsgemäß verhindert.

Da der Benutzer sein Smartphone 10 verwendet, kann er auf eine zusätzliche Fernbedienung verzichten. Sind an dem Wohnwagenanhänger weitere mittels einer Fernbedienung kabellos zu steuernde Einrichtungen vorgesehen, kann er auch hierfür sein Smartphone 10 verwenden, so dass verhindert wird, dass eine Vielzahl unterschiedlicher Fernbedienungen zum Einsatz kommen kann.

## Patentansprüche

1. Fahrzeug (1), insbesondere Fahrzeug (1) ohne eigenen Antrieb, mit einem Rangierantriebssystem, das Rangierantriebssystem umfassend:
- wenigstens zwei Antriebseinheiten (5), die ausgebildet sind, um an dem Fahrzeug (1) vorgesehen zu werden und jeweils ein Rad (3) des Fahrzeuges (1) anzutreiben,
- eine Steuereinrichtung (7), welche mit den Antriebseinheiten (5) verbunden und ausgestaltet ist, um die Antriebseinheiten (5) zu steuern, und
- ein Kit für die kabellose Steuerung des Rangierantriebssystems, das Kit umfassend:
- ein Kommunikationsmodul (8), welches ausgebildet ist, um kabellos Befehle für die Steuerung der Antriebseinheiten (5) zu empfangen,
- Befestigungsmittel, um das Kommunikationsmodul (8) außenseitig an dem Fahrzeug (1) und bevorzugt am Boden des Fahrzeuges (1), zu befestigen, und
- Verbindungsmittel, um das Kommunikationsmodul (8) mit der Steuereinrichtung (7) zu verbinden, so dass die für die Steuerung der Antriebseinheiten (5) kabellos empfangenen Befehle von dem Kommunikationsmodul (8) an die Steuereinrichtung (7) übergeben werden können, wobei die Verbindungsmittel wenigstens ein Kabel (9) und wenigstens einen Stecker umfassen,
wobei das Kommunikationsmodul (8) über die Befestigungsmittel außenseitig an dem Fahrzeug (1) und bevorzugt am Boden des Fahrzeuges (1), befestigt ist, und die Steuereinrichtung (7) im innenraum des Fahrzeugs (1) vorgesehen ist, und
das Kommunikationsmodul (8) mit der Steuereinrichtung (7) über die Verbindungsmittel verbunden ist, wobei
sich das wenigstens eine Kabel (9) der Verbindungsmittel durch eine Öffnung in einer Fahrzeugwandung, insbesondere durch eine Öffnung im Fahrzeugboden, erstreckt und
die Steuereinrichtung (7) wenigstens eine Buchse aufweist, die derart ausgestaltet ist, dass der wenigstens eine Stecker in diese einsteckbar ist, um das Kommunikationsmodul (8) mit der Steuereinrichtung (7) des Rangierantriebssystems zu verbinden.

2. Fahrzeug nach Anspruch 1, **dadurch gekennzeichnet, dass** das Kommunikationsmodul (8) ausgebildet ist, um die Befehle für die Steuerung der Antriebseinheiten (5) kabellos via Bluetooth zu empfangen.

3. Fahrzeug nach einem der vorhergehenden Ansprüche, **dadurch gekennzeichnet, dass** dem Kommunikationsmodul (8) ein temperatur- und/oder witterungsbeständiges Gehäuse zugeordnet ist.

4. Fahrzeug nach einem der vorhergehenden Ansprüche, das Kit weiterhin umfassend eine Bedieneinrichtung, welche derart ausgebildet ist, dass ein Benutzer Befehle für die Steuerung der Antriebseinheiten (5) in die Bedieneinrichtung eingeben kann, und dass die eingegebenen Befehle kabellos an das Kommunikationsmodul (8) übertragen werden, wobei insbesondere die Bedieneinrichtung ausgebildet ist, um die eingegebenen Befehle via Bluetooth an das Kommunikationsmodul (8) zu übertragen.

5. Fahrzeug nach einem der vorhergehenden Ansprüche, das Kit weiterhin umfassend eine App für ein Smartphone oder einen Tablet-PC, welche ausgebildet ist, um einem Benutzer die kabellose Steuerung der Antriebseinheiten (5) über ein Smartphone oder einen Tablet-PC zu ermöglichen.

6. Fahrzeug nach Anspruch 4 und 5, **dadurch gekennzeichnet, dass** die Bedieneinrichtung ein Smartphone oder einen Tablet-PC ist, auf welchem die App installiert ist.

7. Fahrzeug nach Anspruch 2 und 6, **dadurch gekennzeichnet, dass** das Smartphone oder der Tablet-PC Bluetooth-fähig ist.

8. Fahrzeug nach einem der vorhergehenden Ansprüche, **dadurch gekennzeichnet, dass** die Verbindungsmittel wenigstens ein Kabel (9) und wenigstens einen Stecker umfassen, wobei der wenigstens eine Stecker ausgebildet ist, um in wenigstens eine an der Steuereinrichtung (7) vorgesehene Buchse gesteckt zu werden, und so das Kommunikationsmodul (8) mit der Steuereinrichtung (7) zu verbinden.

9. Fahrzeug nach einem der vorhergehenden Ansprüche, **dadurch gekennzeichnet, dass** das Kommunikationsmodul (8) derart ausgebildet ist, dass mit diesem kabellos Daten gesendet werden können.

10. Fahrzeug nach einem der vorhergehenden Ansprüche, **dadurch gekennzeichnet, dass** jede Antriebseinheit (5) ein drehbar gelagertes Antriebselement (6) umfasst, welches derart ausgebildet und angeordnet ist, dass es in Anlage an ein Rad (3) des Fahrzeuges (1) bringbar ist, um das Fahrzeug (1) anzutreiben.

11. Fahrzeug (1) nach einem der vorhergehenden Ansprüche, **dadurch gekennzeichnet, dass** es sich bei dem Fahrzeug (1) um einen Anhänger, insbesondere einen Wohnwagen-, Boots- oder Pferdeanhänger handelt.

12. Verwendung eines Kits für die kabellose Steuerung eines Rangierantriebssystems für ein Fahrzeug (1), insbesondere ein Fahrzeug (1) ohne eigenen Antrieb, wobei das Rangierantriebssystem wenigstens zwei Antriebseinheiten (5) und eine mit den Antriebseinheiten (5) verbundene Steuereinrichtung (7) aufweist, das Kit umfassend
- ein Kommunikationsmodul (8), welches ausgebildet ist, um kabellos Befehle für die Steuerung der Antriebseinheiten (5) zu empfangen,
- Befestigungsmittel, um das Kommunikationsmodul (8) außenseitig an dem Fahrzeug (1), bevorzugt am Boden des Fahrzeuges (1), zu befestigen, und
- Verbindungsmittel, um das Kommunikationsmodul (8) mit der Steuereinrichtung (7) zu verbinden, so dass die für die Steuerung der Antriebseinheiten (5) kabellos empfangenen Befehle von dem Kommunikationsmodul (8) an die Steuereinrichtung (7) übergeben werden können, wobei die Verbindungsmittel wenigstens ein Kabel (9) und wenigstens einen Stecker umfassen,
wobei das Kit in der Weise verwendet wird, dass
das Kommunikationsmodul (8) über die Befestigungsmittel außenseitig an dem Fahrzeug (1) und bevorzugt am Boden des Fahrzeuges (1), befestigt wird, und
das Kommunikationsmodul (8) über die Verbindungsmittel mit der Steuereinrichtung (7), die im Innenraum des Fahrzeugs (1) vorgesehen ist, verbunden wird, wobei
das wenigstens eine Kabel (9) der Verbindungsmittel durch eine Öffnung in einer Fahrzeugwandung, insbesondere durch eine Öffnung im Fahrzeugboden, geführt wird, und
der wenigstens Stecker in wenigstens eine Buchse der Steuereinrichtung gesteckt wird.

## Claims

1. A vehicle (1), in particular a vehicle (1) without its own drive, having a manoeuvring drive system, the manoeuvring drive system comprising:
- at least two drive units (5) which are designed to be provided on the vehicle (1) and to drive a respective wheel (3) of the vehicle (1),
- a control device (7) which is connected to the drive units (5) and is configured to control the drive units (5), and
- a kit for the cable-free control of the manoeuvring drive system, the kit comprising:
- a communication module (8) which is designed to receive commands for control of the drive units (5) in a cable-free manner,
- fastening means for fastening the communication module (8) to the outside of the vehicle (1), and preferably to the bottom of the vehicle (1), and
- connection means for connecting the communication module (8) to the control device (7) so that the commands received, cable-free, for control of the drive units (5), can be transmitted from the communication module (8) to the control device (7), the connection means comprising at least one cable (9) and at least one plug,
the communication module (8) being fastened by the fastening means to the outside of the vehicle (1) and preferably to the bottom of the vehicle (1), and the control device (7) being provided in the interior of the vehicle (1), and
the communication module (8) being connected to the control device (7) by the connection means,
the at least one cable (9) of the connection means extending through an opening in a vehicle wall, in particular through an opening in the vehicle bottom, and
the control device (7) having at least one socket which is configured so that the at least one plug can be inserted into the latter in order to connect the communication module (8) to the control device of the manoeuvring drive system.

2. The vehicle according to Claim 1, **characterised in that the** communication module is (8) designed to receive commands for control of the drive units (5) in a cable-free manner via Bluetooth.

3. The vehicle according to any of the preceding claims, **characterised in that** a temperature- and/or weather-resistant housing is assigned to the communication module (8).

4. The vehicle according to any of the preceding claims, the kit further comprising an operating device which is designed such that a user can input commands for the control of the drive units (5) into the operating device, and that the inputted commands are transmitted, cable-free, to the communication module (8), the operating device being designed in particular to transmit the inputted commands to the communication module (8) via Bluetooth.

5. The vehicle according to any of the preceding claims, the kit further comprising an app for a smartphone or a tablet PC, which is designed to enable a user to control the drive units (5), cable-free, via a smartphone or a tablet PC.

6. The vehicle according to Claim 4 or 5, **characterised in that** the operating device is a smartphone or a tablet PC on which the app is installed.

7. The vehicle according to Claims 2 and 6, **characterised in that** the smartphone or the tablet PC is Bluetooth-enabled.

8. The vehicle according to any of the preceding claims, **characterised in that** the connection means comprise at least one cable (9) and at least one plug, the at least one plug being designed to be inserted into at least one socket provided on the control device (7), and so to connect the communication module (8) to the control device (7).

9. The vehicle according to any of the preceding claims, **characterised in that** the communication module (8) is designed so that it can be used to send data in a cable-free manner.

10. The vehicle according to any of the preceding claims, **characterised in that** each drive unit (5) comprises a rotatably mounted drive element (6) which is designed and arranged such that it can be brought into contact with a wheel (3) of the vehicle (1) in order to drive the vehicle (1).

11. The vehicle (1) according to any of the preceding claims, **characterised in that** the vehicle (1) is a trailer, in particular a caravan trailer, a boat trailer or a horse trailer.

12. The use of a kit for the cable-free control of a manoeuvring drive system for a vehicle (1), in particular a vehicle (1) without its own drive, the manoeuvring drive system comprising at least two drive units (5) and a control device (7) which is connected to the drive units (5), the kit comprising
- a communication module (8) which is designed to receive commands for control of the drive units (5) in a cable-free manner,
- fastening means for fastening the communication module (8) to the outside of the vehicle (1), preferably to the bottom of the vehicle (1), and
- connection means for connecting the communication module (8) to the control device (7) so that the commands received, cable-free, for control of the drive units (5) can be transmitted from the communication module (8) to the control device (7), the connection means comprising at least one cable (9) and at least one plug,
the kit being used in such a way that
the communication module (8) is fastened by the fastening means to the outside of the vehicle (1) and preferably to the bottom of the vehicle (1), and
the communication module (8) being connected by the connection means to the control device (7) which is provided in the interior of the vehicle (1),
the at least one cable (9) of the connection means being guided through an opening in a vehicle wall, in particular through an opening in the vehicle bottom, and
the at least one plug being inserted into at least one socket of the control device.

## Revendications

1. Véhicule (1), en particulier un véhicule (1) sans dispositif de propulsion propre, avec un système d'entrainement de manoeuvre, le système d'entrainement de manoeuvre comprenant :
- au moins deux unités d'entraînement (5) qui sont réalisées de manière à être prévues sur le véhicule (1) et à entraîner chacune une roue (3) du véhicule (1),
- un dispositif de commande (7), lequel est relié aux unités d'entraînement (5) et conçu pour commander les unités d'entraînement (5), et
- un kit pour la commande sans fil du système d'entrainement de manoeuvre, lequel kit comprend :
- un module de communication (8), lequel est configuré pour recevoir sans fil des instructions pour la commande des unités d'entraînement (5),
- des moyens de fixation pour fixer le module de communication (8) sur le côté extérieur du véhicule (1) et de préférence sur le plancher du véhicule (1), et
- des moyens de liaison pour relier le module de communication (8) au dispositif de commande (7) de sorte que les instructions reçues sans fil pour la commande des unités d'entraînement (5) peuvent être transmises depuis le module de communication (8) au dispositif de commande (7), les moyens de liaison comprenant au moins un câble (9) et au moins un connecteur,
le module de communication (8) étant fixé à l'aide des moyens de fixation sur le côté extérieur du véhicule (1) et de préférence sur le plancher du véhicule (1), et le dispositif de commande (7) étant prévu à l'intérieur du véhicule (1), et
le module de communication (8) est relié au dispositif de commande (7) par les moyens de liaison,
l'au moins un câble (9) des moyens de liaison s'étendant à travers d'une ouverture dans une paroi du véhicule, en particulier à travers d'une ouverture dans le plancher du véhicule, et
le dispositif de commande (7) présentant au moins une douille qui est conçue de sorte que l'au moins un connecteur peut être inséré dans celle-ci pour relier le module de communication (8) au dispositif de commande (7) du système d'entrainement de manoeuvre.

2. Véhicule selon la revendication 1, **caractérisé en ce que** le module de communication (8) est configuré pour recevoir des instructions pour la commande des unités d'entraînement (5) sans fil via Bluetooth.

3. Véhicule selon l'une quelconque des revendications précédentes, **caractérisé en ce qu'**un boîtier résistant aux températures et/ou intempéries est assigné au module de communication (8).

4. Véhicule selon l'une quelconque des revendications précédentes, le kit comprenant en outre un appareil de contrôle, lequel est configuré de sorte qu'un utilisateur peut saisir des instructions pour la commande des unités d'entraînement (5) dans l'appareil de contrôle et que les instructions saisies étant transmises sans fil au module de communication (8), l'appareil de contrôle en particulier étant réalisé de manière à transmettre les instructions saisies au module de communication (8) via Bluetooth.

5. Véhicule selon l'une quelconque des revendications précédentes, le kit comprenant également une application pour un smartphone ou une tablette PC, laquelle application est conçue pour permettre à un utilisateur de commander sans fil les unités d'entraînement (5) au moyen d'un smartphone ou d'une tablette PC.

6. Véhicule selon les revendications 4 et 5, **caractérisé en ce que** l'appareil de contrôle est un smartphone ou une tablette PC sur lequel ou laquelle l'application est installée.

7. Véhicule selon les revendications 2 et 6, **caractérisé en ce que** le smartphone ou la tablette PC est compatible Bluetooth.

8. Véhicule selon l'une quelconque des revendications précédentes, **caractérisé en ce que** les moyens de liaison comprennent au moins un câble (9) et au moins un connecteur, l'un au moins un connecteur étant réalisé de manière à être enfichés dans au moins une douille prévue sur le dispositif de commande (7), afin de relier le module de communication (8) au dispositif de commande (7).

9. Véhicule selon l'une quelconque des revendications précédentes, **caractérisé en ce que** le module de communication (8) est conçue de sorte qu'il permet d'envoyer des données sans fil avec celui-ci.

10. Véhicule selon l'une quelconque des revendications précédentes, **caractérisé en ce que** chaque unité d'entraînement (5) comprend un élément d'entraînement (6) monté de manière rotative, lequel élément d'entraînement est conçu et agencé de sorte qu'il peut être mise en appui sur une roue (3) du véhicule (1) pour entraîner le véhicule (1).

11. Véhicule (1) selon l'une quelconque des revendications précédentes, **caractérisé en ce que** le véhicule (1) est une remorque, en particulier une remorque de caravane, de bateau ou un van pour chevaux.

12. Utilisation d'un kit pour la commande sans fil d'un système d'entrainement de manoeuvre pour un véhicule (1), en particulier un véhicule (1) sans dispositif de propulsion propre, **caractérisée en ce que** le système d'entrainement de manoeuvre comprend au moins deux unités d'entraînement (5) et un dispositif de commande (7) relié aux unités d'entraînement (5), le kit comprenant :
- un module de communication (8), lequel est configuré pour recevoir sans fil des instructions pour la commande des unités d'entraînement (5),
- des moyens de fixation pour fixer le module de communication (8) sur le côté extérieur du véhicule (1), de préférence dans le plancher du véhicule (1), et
- des moyens de liaison pour relier le module de communication (8) au dispositif de commande (7) de sorte que les instructions reçues sans fil pour la commande des unités d'entraînement (5) depuis le module de communication (8) peuvent être transmises au dispositif de commande (7), les moyens de liaison comprenant au moins un câble (9) et au moins un connecteur,
le kit étant utilisé de sorte que
le module de communication (8) est fixé à l'aide des moyens de fixation sur le côté extérieur du véhicule (1) et de préférence dans le plancher du véhicule (1), et
le module de communication (8) est relié par les moyens de liaison au dispositif de commande (7) qui est prévu à l'intérieur du véhicule (1),
l'au moins un câble (9) des moyens de liaison étant guidé à travers d'une ouverture dans une paroi du véhicule, en particulier à travers d'une ouverture dans le plancher du véhicule, et
l'au moins un connecteur étant enfiché dans au moins une douille du dispositif de commande.
